# EUROPÄISCHE PATENTANMELDUNG

(11) **EP 2 378 159 A2**
(43) Veröffentlichungstag der Anmeldung: **19.10.2011**
(21) Anmeldenummer: 11075048.6
(22) Anmeldetag: 11.03.2011
(51) Int. Cl.: F16G 13/06

(54) **Rollenkette**

(30) Priorität: 13.04.2010 DE 202010005148 U
(71) Anmelder: Renold GmbH, 37574 Einbeck (DE)
(72) Erfinder: Ragnitz, Detlef, 37586 Dassel (DE); Kreipe, Hans-Jürgen, 33181 Wünnenberg (DE)
(74) Vertreter: Pfenning, Meinig & Partner GbR

(57) **Zusammenfassung**

Eine Rollkette besteht aus Bolzen (1), Buchen (2), Rollen (3), Innenlaschen (4) und Außenlaschen (5). Jeweils zwei Buchsen sind durch mindestens zwei Innenlaschen miteinander verbunden und bilden ein Kettenglied. Auf jeder Buchse ist eine diese umfassende Rolle drehbar gelagert. Jeweils zwei aufeinanderfolgende Kettenglieder sind dadurch gelenkig miteinander verbunden, dass jede Buchse auf einem über die beiden Enden der Buchse hinausragenden Bolzen angeordnet ist und zwei so von zwei aufeinanderfolgenden Kettengliedern umfasste Bolzen zumindest durch zwei Außenlaschen verbunden sind. Zumindest ein Teil der Buchsen besteht aus einer Kupferlegierung, wobei diese Buchsen in einem Massivumformverfahren hergestellt sind.

## Beschreibung

Die Erfindung betrifft eine Rollenkette mit Bolzen, Buchen, Rollen, Innenlaschen und Außenlaschen nach dem Oberbegriff des Anspruchs.

Derartige, häufig für Antriebe genutzte Ketten sind dort, wo Oberflächen gleitend aufeinander gelagert sind, also insbesondere auf Innenseite der Buchsen und an diesen anliegenden äußeren Oberflächen der Bolzen, wenn diese jeweils aus Stahl bestehen, hohem Verschleiß ausgesetzt. Um den Verschleiß in Grenzen zu halten, ist an den genannten Stellen üblicherweise eine gute Schmierung erforderlich. Bei einem Trockenoder Notlauf derartiger Ketten treten jedoch eine rasche Beschädigung oder Zerstörung der Kette und darüber hinaus drastische Energieverluste auf.

Um eine geringere Anfälligkeit derartiger Ketten für Beschädigungen auch bei ungenügender Schmierung zu erreichen, ist es bekannt, die Bolzen und/oder die Buchsen mit Nitriden oder DLC, einer diamantähnlichen Kohlenstoffschicht, zu beschichten. auch diese Ketten haben jedoch den Nachteil, dass der bei einem Trockenlauf der Kette zumindest an einer von jeweils zwei aufeinander gleitenden Oberflächen auftretende Verschleiß über ein angestrebtes kleines Maß hinausgeht. Außerdem werden die Herstellungskosten erhöht.

Es auch bekannt, Ketten mit Bronzebuchsen auszustatten, da diese ausgezeichnete Notlaufeigenschaften aufweisen. Jedoch wurden diese Bronzebuchsen bisher durch spanabhebende Bearbeitung wie Drehen hergestellt, wodurch der Fertigungsaufwand für derartige Ketten erheblich ist und diese sich daher in der Praxis nicht durchsetzen konnte.

Es ist daher die Aufgabe der vorliegenden Erfindung, eine Rollenkette mit Bolzen, Buchsen, Rollen, Innenlaschen und Außenlaschen, bei der jeweils zwei Buchsen durch mindestens zwei Innenlaschen miteinander verbunden sind und dadurch ein Kettenglied bilden, wobei auf jeder Buchse eine diese umfassende Rolle drehbar gelagert ist und wobei jeweils zwei aufeinanderfolgende Kettenglieder dadurch gelenkig miteinander verbunden sind, dass jede Buchse auf einem über die beiden Enden der Buchse hinausragenden Bolzen angeordnet ist und zwei so von zwei aufeinanderfolgenden Kettengliedern umfasste Bolzen zumindest durch zwei Außenlaschen verbunden sind, anzugeben, die gute Notlaufeigenschaften besitzt und kostengünstig hergestellt werden kann.

Diese Aufgabe wird erfindungsgemäß dadurch gelöst, dass zumindest ein Teil der Buchsen aus einer Kupferlegierung besteht und diese Buchsen in einem Massivumformverfahren hergestellt sind. Die Fertigung der Buchsen kann in der Weise erfolgen, dass von einem stangen- oder drahtförmigen Halbzeug aus einer Kupferlegierung Stücke definierter Länge abgeschnitten werden und diese Stücke jeweils zur Bildung einer Buchse einer Massivumformung bzw. einem Kaltpressvorgang unterzogen werden. Dies kann in wesentlich kürzerer Zeit als der für eine spanabhebende Bearbeitung durchgeführt werden. Außerdem fallen bei der Massivumformung keine Schneidabfälle an.

Als bevorzugte Kupferlegierungen werden Bronze oder Messing verwendet. Um die Notlaufeigenschaften noch weiter zu verbessern, kann den Kupferlegierungen noch ein geringer Bleianteil hinzugefügt sein.

Die anderen Bestandteile der Kette können aus Stahl, insbesondere einsatzgehärtetem, vergütetem oder rostfreiem Stahl bestehen. Jedoch kann es insbesondere auch zur Erzielung eines verbesserten Trockenlaufs vorteilhaft sein, auch die Rollen aus einer Kupferlegierung herzustellen, wobei diese Rollen aus Kostengründen ebenfalls durch Massivumformung gefertigt sein sollten.

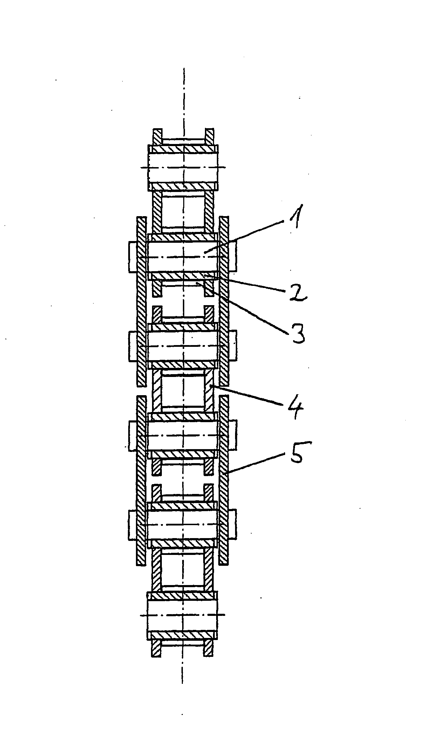

Die Erfindung wird im Folgenden anhand eines in der Figur dargestellten Ausführungsbeispiels näher erläutert. Diese zeigt einen Abschnitt einer Rollenkette im Längsschnitt.

Die in der Figur abgebildete Rollenkette besteht aus Bolzen 1, Buchsen 2, Rollen 3, Innenlaschen 4 und Außenlaschen 5. Jeweils zwei Buchsen 2 sind durch zwei mit diesen Buchsen 2 fest verbundene Innenlaschen 4 miteinander verbunden und bilden mit diesen beiden Innenlaschen 4 ein Kettenglied, wobei auf jeder Buchse 2 eine diese umfassende Rolle 3 drehbar gelagert ist. Jeweils zwei aufeinanderfolgende Kettenglieder dieser Art sind dadurch gelenkig miteinander verbunden, dass jede Buchse 2 auf einem über die beiden Enden dieser Buchse 2 hinausragenden Bolzen 1 sitzt und zwei so von jeweils einer Buchse 2 umfasste Bolzen 1 von zwei aufeinanderfolgenden Kettengliedern durch zwei Außenlaschen 5 miteinander verbunden sind, wobei jeweils ein Ende der beiden Bolzen 1 in einer Bohrung an jeweils einem Ende einer Außenlasche 5 gelagert ist.

Erfindungsgemäß besteht zumindest ein Teil der Buchsen aus einer Kupferlegierung wie Bronze oder Messing und diese Buchsen wurden nahtlos kaltfließgepresst. Die anderen Teile der Rollenkette sind vorzugsweise aus Vergütungsstrahl gefertigt. Jedoch kann es vorteilhaft sein, da auch zwischen den Buchsen 2 und den diese umfassenden Rollen 1 eine Reibung auftritt, auch die Rollen 3 aus einer Kupferlegierung herzustellen und diese durch einen Massivumformvorgang zu fertigen. Hierdurch werden die Reibungskräfte zwischen den Buchsen 2 und den Rollen 3 weiter herabgesetzt und die Notlaufeigenschaften verbessert.

## Patentansprüche

1. Rollenkette mit Bolzen (1), Buchen (2), Rollen (3), Innenlaschen (4) und Außenlaschen (5), bei der jeweils zwei Buchsen (2) durch mindestens zwei Innenlaschen (4) miteinander verbunden sind und dadurch ein Kettenglied bilden, wobei auf jeder Buchse (2) eine diese umfassende Rolle (3) drehbar gelagert ist und wobei jeweils zwei aufeinanderfolgende Kettenglieder dadurch gelenkig miteinander verbunden sind, dass jede Buchse (2) auf einem über die beiden Enden der Buchse (2) hinausragenden Bolzen (1) angeordnet ist und zwei so von zwei aufeinanderfolgenden Kettengliedern umfasste Bolzen (1) zumindest durch zwei Außenlaschen (5) verbunden sind, **dadurch gekennzeichnet, dass** zumindest ein Teil der Buchsen (2) aus einer Kupferlegierung besteht und diese Buchsen (2) in einem Massivumformverfahren hergestellt sind.

2. Rollenkette nach Anspruch 1, **dadurch gekennzeichnet, dass** die Kupferlegierung Bronze ist.

3. Rollenkette nach Anspruch 1, **dadurch gekennzeichnet, dass** die Kupferlegierung Messing ist.

4. Rollenkette nach einem der Ansprüche 1 bis 3, **dadurch gekennzeichnet, dass** die Kupferlegierung Blei enthält.

5. Rollenkette nach einem der Ansprüche 1 bis 4, **dadurch gekennzeichnet, dass** die Bolzen (1) aus einsatzgehärtetem Stahl, Vergütungsstahl oder rostfreiem Stahl hergestellt sind.

6. Rollenkette nach einem der Ansprüche 1 bis 4, **dadurch gekennzeichnet, dass** Bolzen (1), Rollen (3), Innenlaschen (4) und Außenlaschen (5) aus rostfreiem Stahl hergestellt sind.

7. Rollenkette nach einem der Ansprüche 1 bis 5, **dadurch gekennzeichnet, dass** die Rollen (3) aus einer Kupferlegierung bestehen und in einem Massivumformverfahren hergestellt sind.
